# EUROPEAN PATENT APPLICATION

(11) **EP 0 562 616 A1**
(43) Date of publication of application: **29.09.1993**
(21) Application number: 93105030.6
(22) Date of filing: 26.03.1993
(51) Int. Cl.: B23K 26/14

(54) **Laser irradiation unit**

(30) Priority: 26.03.1992 JP 16059/92; 06.10.1992 JP 266430/92
(71) Applicant: MITSUI PETROCHEMICAL INDUSTRIES, LTD., Tokyo (JP)
(72) Inventor: Murakami, Seigou, c/o Mitsui Petrochem., Sodegaura-shi, Chiba-ken (JP); Uchida, Takahiro, c/o Miyachi Technos Corp. Ind. L, Chiba-ken (JP); Haruta, Koichi, c/o Mitsui Petrochem., Sodegaura-shi, Chiba-ken (JP); Terashi, Yuichiro, c/o Mitsui Petrochem., Sodegaura-shi, Chiba-ken (JP)
(74) Representative: Füchsle, Klaus, Dipl.-Ing.

(57) **Abstract**

A laser irradiation unit for use in a working apparatus using a laser such as a laser welding machine or a laser cutting machine, to improve the operating efficiency of interchanging the lens. The laser irradiation unit comprises: a cylindrical body (3) having a laser irradiation port (2) at its leading end; and a concentrate lens (4a, 4b) disposed in the body (3) for concentrating a laser beam introduced and eradiating the concentrated laser beam from the laser irradiation port (2). The concentrate lens (4a, 4b) is disposed at each of the incident side and the irradiation side of the laser beam. Further comprised is a cylindrical spacer (36) interposed in an interchangeable and suppliable manner between the incident side lens (4a) and the irradiation side lens (4b) for setting the spacing between the lenses (4a, 4b).

## Description

### BACKGROUND OF THE INVENTION

The present invention relates to a laser irradiation unit for use in a working apparatus using a laser such as a laser welding machine or a laser cutting machine.

The laser welding machine of this kind is troubled most seriously by the soil of an optical system.
Specifically, the laser welding machine is equipped with an irradiation unit for irradiating a laser beam guided from a laser apparatus through an optical fiber or a mirror to an object to be welded.

This laser irradiation unit is attached, when used, to the leading end of the optical fiber or mirror for guiding the laser beam from the laser apparatus. This unit is constructed to include a cylindrical body having a laser irradiation port at its leading end, and a lens disposed in the body for concentrating the laser beam introduced and irradiating the concentrated laser beam from the laser irradiation port. Moreover, the laser irradiation unit is attached to the leading end of a robot hand so that it is usually automated to perform a predetermined welding operation in accordance with a preset program.

When the object to be welded such as a metal work is to be welded by using such irradiation unit, the metal sputter melted by the laser beam may be dispersed during the welding operation.

The lens has its optical characteristics degraded if the sputter sticks to the lens. Thus, it becomes necessary to interchange the lens or the irradiation unit itself or to clean the inner face of the laser irradiation port periodically.

The lens interchange is troubled by the following problems.

Since the lens used in the irradiation unit has a curvature error of about 1 %, the laser beam goes out of focus in accordance with the lens interchange. With this shift of the laser beam from the focal point, the welding operation cannot be sufficiently achieved. Thus, it is necessary to reset all the data of the program set in the robot so much as to offset the shift thereby to ensure the predetermined gap relative to the work. These operations are seriously troublesome.

Against the lens soil, on the other hand, a transparent protective glass is arranged in the body between the laser irradiation port and the concentrate lens.

This protective glass, if provided, can protect the lens to some extent but in turn it is soiled of itself. As a result, the frequency of interchanging the protective glass becomes so high that the production line has to be interrupted if it incorporates the laser unit.

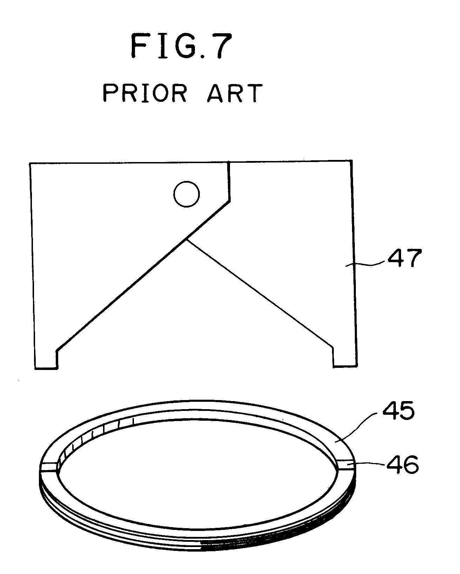

A technology known in the art as for interchanging that protective glass is shown in Fig. 7. The protective glass is fixed, as shown in Fig. 7, in the unit body by means of an optical threaded ring 45 which is slitted at 46 in its two ends. The removal of this protective glass requires a special driver, as designated at 47 in Fig. 7 and is so troublesome as to require a long time for removing and interchanging the protective glass.

### SUMMARY OF THE INVENTION

The present invention has been conceived in view of the aforementioned problems and has an object to provide such a technology in a laser irradiation unit to be used in a laser working apparatus as to prevent the soil itself of a lens and to improve the working efficiency of interchanging the soiled lens.

According to a first aspect of the present invention, there is provided a laser irradiation unit comprising: a cylindrical body having a laser irradiation port at its leading end; and a concentrate lens disposed in said body for concentrating a laser beam introduced and irradiating the concentrated laser beam from said laser irradiation port, wherein said concentrate lens is disposed at each of the incident side and the irradiation side of the laser beam, and wherein the improvement further comprises a cylindrical spacer interposed in an interchangeable and suppliable manner between said incident side lens and said irradiation side lens for setting the spacing between said lenses.

According to the first laser irradiation unit, the position of not the incident side lens but the irradiation side lens can be changed by adjusting the inter-lens distance as a result of interchanging or supplying the cylindrical spacers, so that the shift of the focal point of the laser beam caused as a result of the lens interchange can be absorbed by change in the length of the spacer. According to the present invention, the positional shift can be absorbed by either interchanging the original cylindrical spacer by another cylindrical spacer having a length enlarged or reduced to an extent corresponding to the shift of the focal point of the laser beam or supplying another cylindrical spacer.

According to a second aspect of the present invention, there is provided a laser irradiation unit comprising: a cylindrical body having a laser irradiation port at its leading end; a concentrate lens disposed in said body for concentrating a laser beam introduced and irradiating the concentrated laser beam from said laser irradiation port; and a transparent protective glass arranged in said body between said laser irradiation port and said concentrate lens, wherein said body is divided into one and the other at a portion to be arranged with said protective glass, and wherein the one and other portions of said body can be so fitted each other that said protective glass can be clamped between said one and other body portions when said one body portion is fitted in the other.
According to the second laser irradiation unit, the protective glass can be removed from the one and other portions of the body merely by dividing the body into the two portions. Moreover, a new protective glass can be mounted for a short interchange time merely by clamping it between the two portions.

According to a third aspect of the present invention, there is provided a laser irradiation unit comprising: a cylindrical body; an irradiation nozzle disposed at the leading end portion of said body and having a laser irradiation port at its leading end; and a lens disposed in said body for concentrating a laser beam introduced and irradiating the concentrated laser beam from said laser irradiation port, wherein said irradiation nozzle includes: an inner nozzle cylinder having a laser irradiation port at its leading end; and an outer cylinder engaging threadedly with said inner nozzle cylinder around the outer circumference of said inner nozzle cylinder and forming a gas passage, through which assist gases are passed, between itself and said inner nozzle cylinder, and wherein one of said inner nozzle cylinder and said outer cylinder includes a plunger mounting bed extended toward the other and having a plunger for abutting in the radial direction against the circumference of the other of said inner nozzle cylinder and said outer cylinder.

According to the third laser irradiation unit, the plunger at one of the inner nozzle cylinder and the outer cylinder radially comes into abutment against the other when the outer cylinder is threadedly fitted on the inner nozzle cylinder, so that their threaded engagement is held unslack by the friction coming from their abutment.

According to a fourth aspect of the present invention, there is provided a laser irradiation unit comprising: a nozzle portion having a laser irradiation port facing a work; a laser irradiation optical system for irradiating a laser beam from said laser irradiation port; a passage space positioned between said laser irradiation port and said laser irradiation optical system for passing said laser beam therethrough; and a holder having a blow gas outlet for blowing out blow gas in a direction substantially perpendicular to the laser irradiating direction in said passage space, wherein said holder includes a connecting member connecting said nozzle portion to said laser irradiating optical system and opening the surrounding of said passage space to the outside.

According to the fourth laser irradiation unit, the walls, which might otherwise be hit by the sputter or fume scattered from the work being welded, are eliminated as many as possible so that the sputter eliminating effect can be enhanced.

This sputter eliminating effect can be expected to a better level by adopting the structure, in which the gas blow inlets are diametrically enlarged to increase the flow rate of the gas blow and in which the gas blow outlets are thinly slitted to accelerate the flow velocity of the gas blow.

In addition, the sputter eliminating effect can be ensured by forming the gas blow outlets into a structure of two stages.

In this invention, air or various one of inactive gases such nitrogen or argon etc. can be used such as blow gas. However desirable gas is air.

Moreover, the sputter stick preventing nozzle is made of a copper-chromium alloy so that the shield gas blow nozzle can have its leading end prevented from being hit by the sputter or fume and accordingly from being clogged with the sputter or fume.

Furthermore, since the irradiation unit is formed of the assist gas nozzle holder having a large aperture, the laser induced plasma can be observed spectrophotometrically to monitor the laser process. Another feature is that the sputter protecting glass can be easily observed.

### BRIEF DESCRIPTION OF THE DRAWINGS

Fig. 1 is a schematic half section showing a laser irradiation unit according to first to fourth embodiments;
Fig. 2 is a detailed section showing a lens mounting portion used in the first embodiment;
Fig. 3 is a section showing an interchanging and supplying cylindrical spacer to be used in the lens mounting portion of Fig. 2;
Fig. 4 is a detailed section showing a protective glass mounting portion used in the second embodiment;
Fig. 5 is a section showing a ball plunger used in an irradiation nozzle portion of the third embodiment;
Fig. 6 is a side elevation showing a portion of the fourth embodiment; and
Fig. 7 is a perspective view showing a protective glass mounting portion and a mounting tool in the laser irradiation unit of the prior art.

### DESCRIPTION OF THE PREFERRED EMBODIMENTS

The present invention will be described in the following in connection with its embodiments with reference to the accompanying drawings.

### 〈First Embodiment〉

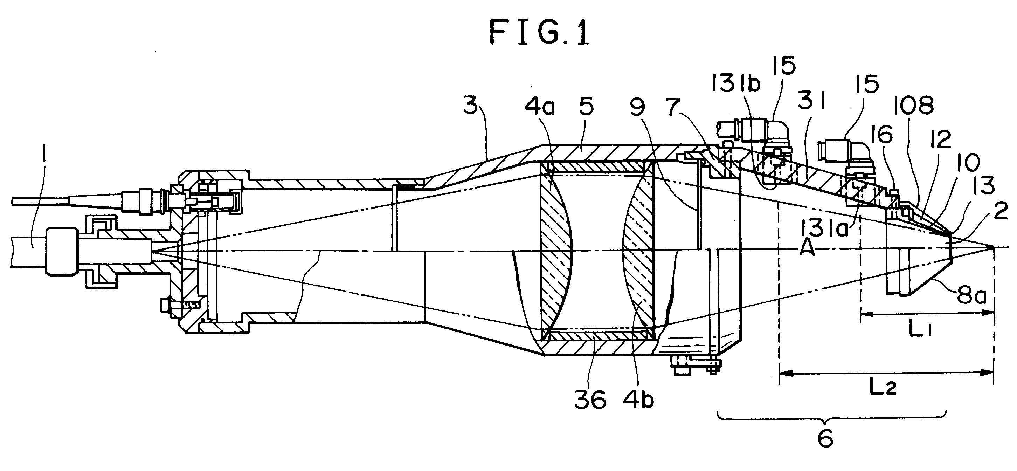

As shown in Fig 1, a laser beam irradiation unit of the present embodiment is connected to the leading end of an optical fiber 1. This optical fiber 1 is connected to a not-shown laser apparatus to guide the laser beam emitted from the laser apparatus to the present unit.

This unit is constructed of a cylindrical body 3 having a laser irradiation port 2 at its leading end. This body 3 is composed of a cylindrical drum 5 having two concentrate lenses 4a and 4b fitted therein, and a leading end unit portion 6 connected to the cylindrical drum 5. This leading end unit portion 6 is composed of a connecting cylinder 7, a holder 31 leading from the connecting cylinder 7, and an irradiation nozzle 8 having a converging end.

The connecting cylinder 7 of the leading end unit portion 6 and the cylindrical drum 5 are threadedly fastened, as shown in Fig. 1, but may be jointed by means of disengageable hooks or the like, although not shown. A space A is formed in the leading end unit 6 to pass the laser beam therethrough and is equipped with first gas inlets 15 and 15 and a second gas inlet 16 for guiding gases from the outside.

The irradiation nozzle 8 at the leading end of the body is equipped with the laser irradiation port 2 at its leading end and is constructed to emit the laser beam concentrated by the concentrate lenses 4a and 4b from the laser irradiation port 2. In front of the concentrate lenses 4a and 4b at the side of the laser irradiation port 2, there is interposed between the laser irradiation port 2 and the lens a transparent protective glass 9 which is fitted in the joint portion of the cylindrical drum 5 and the connecting cylinder 7.

In the irradiation nozzle 8, moreover, there is sectionally concentrically disposed an inner nozzle cylinder 10 which defines a gas passage 12 between itself and the outer nozzle cylinder 8a of the irradiation nozzle 8. As a result, the gas passage 12 is opened around the laser irradiation port 2 to form an assist gas injection port.

The second gas inlet 16 leads to the gas passage 12 between the outer nozzle cylinder 8a of the irradiation nozzle 8 and the inner nozzle cylinder 10. The gas inlet 16 is supplied with the gases from an assist gas source such as an argon, nitrogen or helium gas source.

On the other hand, the first gas inlet 15 is supplied with gases from a not-shown compression gas source such as an gas compressor. Incidentally, these gases are used for protecting the optical system.

The aforementioned concentrate lenses 4a and 4b are individually convex lenses each having a flat plane at its one face and an arcuate plane at its other face and are arranged one at the incident side of the laser beam and the other at the emanating side of the laser beam.

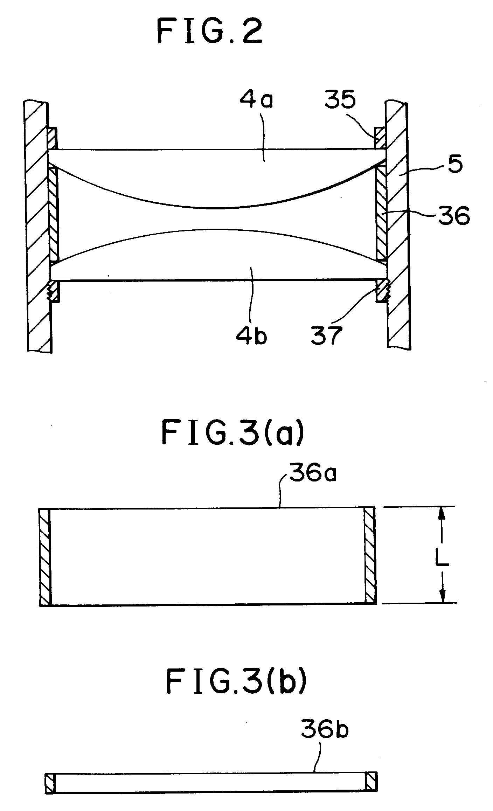

The individual lenses 4a and 4b have their arcuate faces opposed to each other. As shown in Fig. 2, the incident side concentrate lens 4a, the spacer 36 and the emanating side concentrate lens 4b are clamped between a retaining step 35, which is threadedly fastened into the cylindrical drum 5, and a retaining threaded ring 37, by retaining the incident side concentrate lens 4a in the retaining step 35, by inserting a spacer 36 into the cylindrical drum 5, by inserting the emanating side concentrate lens 4b into the cylindrical drum 5, and by fastening the retaining threaded ring 37 into the cylindrical drum 5. Here, the spacing between the lenses 4a and 4b is defined by a length (or thickness) L of the spacer 36. Incidentally, the retaining step 35 may be formed integrally with the cylindrical drum 5.

For the spacer 36, there may be prepared a plurality of interchanging spacers which have their lengths L enlarged or reduced by several millimeters (usually 1 mm, 2 mm or 3 mm, or preferably 1 mm or 2 mm), as designated at 36a in Fig. 3(a), from the original spacer 36 before interchanged. Alternatively, there may be prepared a plurality of supplying spacers which have lengths usually of 1 mm, 2 mm or 3 mm or preferably of 1 mm or 2 mm, as designated at 36b in Fig. 3(b).

Incidentally, all the spacers 36, 36a and 36b are made of a metal such as aluminum, nickel or copper.

By these spacer 36a or 36b, the concentrate lenses 4a and 4b are positioned to determine the focal point F0 of the laser beam.

The laser irradiation unit thus constructed is attached to a robot hand, for example, so that it is used as an automatic welding apparatus according to a program set in the robot hand.

In this case, the unit body 3 has its base 40 attached to the leading end of the robot hand. At this time, data for positioning the irradiation unit with respect to a work are inputted to a program of a distance O-F₀ from an origin of the base mounting position O to the focal point F₀ of the laser beam.

On the basis of these data, the robot hand can apply the focal point of the laser beam emitted from the irradiation unit, reliably to the point of work to be welded.

After a long use, for example, especially the irradiation side concentrate lens 4b is soiled and has to be interchanged, as has been described hereinbefore. In accordance with this interchange, the focal point F₀ of the laser beam is shifted to F₁ due to the curvature errors of the lenses. The difference of (F₀ - F₁) between the points F₀ and F₁ is at ± 1 to 2 mm usually and at about 3 mm at the maximum. Then, the welding operation is not sufficient if it is continued while leaving the shift as it is. In the present invention, therefore, the original spacer is replaced in advance by another (e.g., the spacer 36a of Fig. 3(a)) having a difference of ± 1 to 3 mm. Alternatively, another spacer (e.g., the spacer 36b of Fig. 3(b)) having a necessary length of 1 mm, 2 mm or 3 mm is superposed upon (or supplied to) the original one to adjust the focal point of the laser beam to the point F₀.

Then, the positional relation between the irradiation unit and the work can be maintained as before without changing the data of the program.

According to the first invention, the positional shift of the focal point of the laser beam accompanying the interchange of the lens can be corrected merely by changing the spacer, but with neither resetting the program nor adjusting the positional relation between the irradiation unit and the work, as different from the prior art. Thus, the laser working operation can be continued at the optimum level.

### 〈Second Embodiment〉

The structure of the laser irradiation unit of the present embodiment makes use of the lens mounting portion (using no spacer) of the prior art.

The unit of the present embodiment is identical to that of the first embodiment except that a protective glass mounting unit is used, as will be described in the following. Therefore, the description of the present embodiment will be limited to the protective glass mounting portion.

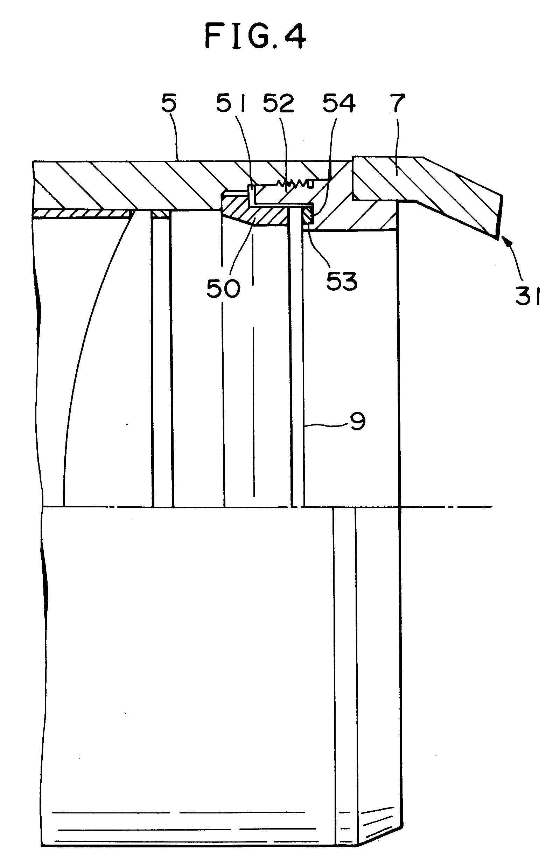

The structure of the mounting unit of the protective glass 9 used in the present embodiment will be described in detail in the following with reference to Fig. 4.

As has been described before, the cylindrical drum 5 and the connecting cylinder 7 are removably fastened, and the protective glass 9 is fitted in the connected portion of the two.

The cylindrical drum 5 is equipped with an annular ring 50 on the inner circumference of its open end to be connected to the connecting cylinder 7. The annular ring 50 is fitted at its one end by fastening or pressing it in a fitting groove formed in the cylindrical drum. The other end of the annular ring 50 is formed with a fitting annular slit 51 between itself and the cylindrical drum 5.

On the other hand, the connecting cylinder 7 is equipped at its end face with a fitting joint ring 52 to be fitted in the aforementioned fitting annular slit 51.

This fitting joint ring 52 is inserted into the slit 51 and fitted in the cylindrical drum 5. At this time, the joint ring 52 is threadedly fastened in the cylindrical drum 5. The joint ring 52 is formed in its base portion with a step 53, which is recessed to receive an O-ring 54.

The protective glass 9 is fitted in the fitting joint ring 52. When this fitting joint ring 52 is inserted into the fitting annular slit 51, the protective glass 9 has its circumferential edge fixedly clamped between the O-ring 54 and the end portion of the fitting annular ring 50. If the connecting cylinder 7 is removed from the cylindrical drum 5, the protective glass 9 is released from its retained state between the O-ring 54 and the fitting annular ring 50 so that it can be easily removed and promptly interchanged.
Incidentally, the present invention should not naturally be limited to the structure of this embodiment if the structure is constructed to clamp the protective glass 9 between the split bodies, i.e., the connecting cylinder 7 and the cylindrical drum 5.

According to the irradiation unit of the present embodiment, the protective glass can be removed and mounted merely by removing one of the bodies from the other, so that it can be interchanged promptly and easily to make the operations efficient.

### 〈Third Embodiment〉

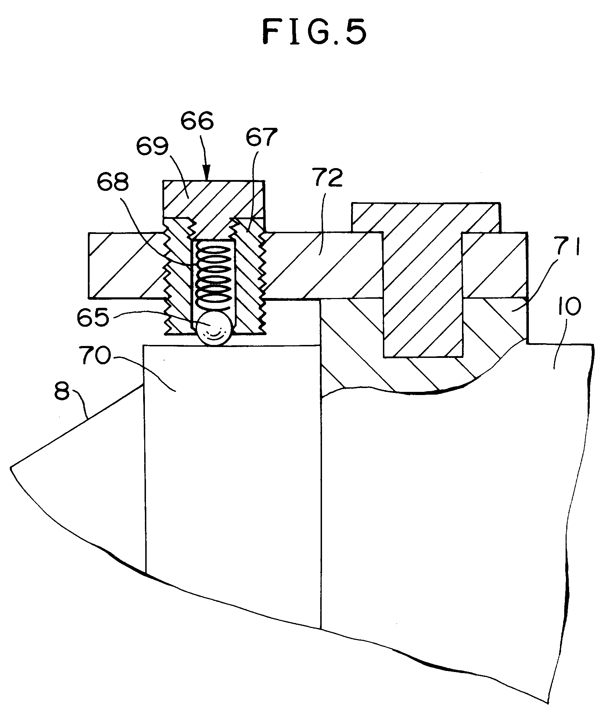

The irradiation nozzle 8 of the present embodiment is constructed, as shown in Fig. 5, such that its outer nozzle cylinder 8a (8) is fastened through its thread or fixed by a plug 69 to the leading end of the inner nozzle cylinder 10. This inner nozzle cylinder 10 has its inner face converged but is formed with a portion such as a mounting bed 72 for mounting a plunger body 67. Moreover, the outer nozzle cylinder 8a (8) has its maximum diameter portion flattened to form an outer circumference 70, which is knurled to prevent a slippage. On the other hand, the inner nozzle cylinder 10 has a larger-diameter portion 71 than the diameter of the outer circumference 70 of the outer nozzle cylinder 8a (8), and the plunger mounting bed 72 extending toward the outer circumference 70 of the outer nozzle cylinder 8a (8) is threadedly fastened on the larger-diameter portion 71.

In the plunger mounting bed 72, there is fitted a ball plunger 66 which is in radial abutment against the outer circumference 70 of the outer nozzle cylinder 8a.

The ball plunger 66 is constructed to have its ball 65 urged by a spring 68, which is fitted in the cylindrical plunger body 67, to protrude the ball partially from the opening of the plunger body 67. The leading end opening of the plunger body 67 is set to have a smaller diameter than that of the ball so that the ball 65 is prevented from coming out of the plunger body 67. The plunger 68 is fixed by the threaded portion of plug 69 which is fitted in the plunger body 67.

If the outer nozzle cylinder 8a is threaded engaged by the inner nozzle cylinder 10, the outer circumference 70 comes into engagement with the ball 65 of the plunger 66 while pushing it. On the other hand, this pushing fore acts as a reaction from the spring 68 to push the outer circumference in the radial direction. Since the irradiation nozzle 8 always receives the urging force at its outer circumference 70, the outer nozzle cylinder 8a is prevented from slackening and the irradiation nozzle 8 from coming out of the holder 31, even if an external stress such as more or less vibrations is received during the operation.

Incidentally, effects like the aforementioned ones can be attained even if the ball plunger 66 is provided by making the diameter of the larger-diameter portion 71 of the inner nozzle cylinder 10 smaller than that of the outer circumference 70 of the outer nozzle cylinder 8a, by forming the outer circumference with the plunger mounting bed 72 extended toward the larger-diameter portion 71, and by forming the plunger mounting bed 72 with the ball plunger 66 to abut against the circumference of the larger-diameter portion 71 of the inner nozzle cylinder 10 in the radial direction.

Moreover, the plunger 66 can naturally be replaced by another such as a leaf spring or a pin if it can apply the pushing force in the radial direction to the circumference of the outer nozzle cylinder 8a or the inner nozzle cylinder 10.

According to the laser irradiation unit of the third embodiment, the threaded engagement of the outer nozzle cylinder of the irradiation nozzle 8 with the inner nozzle cylinder is prevented from being made loose due to vibrations or the like because the outer nozzle cylinder is held in engagement, after the irradiation nozzle 8 has been removed, and is held by the plunger 66.

### 〈Fourth Embodiment〉

The present embodiment will be described by reverting to Fig. 1.

The unit body 3 is constructed to include the cylindrical drum 5 having the concentrate lenses 4a and 4b packaged therein, and the leading end unit 6 connected to the cylindrical drum 5. The leading end unit 6 is composed of the connecting cylinder 7, the holder 31 leading to the connecting cylinder 7, and a converging assist gas nozzle 108 having a converging end.
Incidentally, the reference numerals identical to those of the foregoing individual embodiments designate the common components so that their description will be omitted.

The connecting cylinder 7 of the leading end unit 6 and the cylindrical drum 5 are removably connected to each other. In correspondence to the aforementioned holder 31, the aforementioned laser irradiation port and the lens system 4a and 4b or the aforementioned laser irradiation optical system define the aforementioned passage space A for passing the laser beam.

The laser irradiation port 2 is formed in the leading end of the converging assist gas nozzle 108 for irradiation the laser beam concentrated the concentrate lenses 4a and 4b through the passage space A from the laser irradiation port 2.
In front of the laser irradiation port of the concentrate lenses 4a and 4b, there is interposed between the laser irradiation port 2 and the concentrate lenses 4a and 4b the protective glass 9 acting as the transparent filter, which is fitted in the connected portion between the cylindrical drum 5 and the connecting cylinder 7.

Next, the holder 31 is positioned between the laser irradiation port 2 and the concentrate lenses 4a and 4b, as described above, to conceptionally define the passage space A for the laser beam. Since this holder 31 has a column shape, the passage space A has its substantial circumference opened to the outside. The holder 31 is formed with first and second blow gas outlets 131a and 131b for blowing the blow gas into the passage space A.

In other words, the holder 31 is given the minimum width necessary for forming the first and second blow gas outlets 131a and 131b along the passage space A and has none of such obstruction in the blow gas direction as might otherwise obstruct at least the blow-out or release of the blow gas from the passage space. In short, in order to reduce the reflection of the sputter, the intermediate passage from the work to be welded to the concentrate lenses 4a and 4b has its wall eliminated except the blow gas outlets, the converging assist gas nozzle 108 and the columns supporting the former two members. As a result, the holder 31 can be formed to have such a diameter as to confirm the laser-induced plasma visually in spectrophotometry and to monitor the laser process. The sputter protecting glass 9 can also be easily observed.

In order to optimize the sputter eliminating effect, moreover, the first and second blow gas outlets 131a and 131b are arranged at a substantial spacing ratio of L₁ : L₂ = 1 : 2, if they have distances L₁ and L₂.

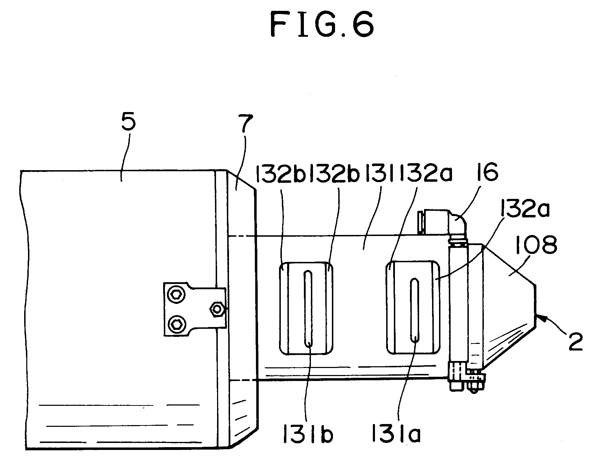

As shown in Fig. 6, moreover, the first and second blow gas outlets 131a and 131b are slitted to have a width no more than 3 mm so that the gas blow is given a high speed to enhance the sputter eliminating effect better.

Along the slitted blow gas outlets 131a and 131b, there are formed slitted gas inlets 132a and 132a, and 132b and 132b. When the blow gas is injected from those blow gas outlets 131a and 131b, the ambient gas is introduced from the slitted gas inlets 132a and 132b into the passage space A thereby to prevent any turbulent flow from being established in the passage space A.

Incidentally, the first and second blow gas outlets 131a and 131b are connected to the gas compressor or nitrogen gas source so that the gas blow is discharged from the open face surrounding the passage space A.

Next, the converging assist gas nozzle 108 is the gas inlet 16 and the sectionally concentric inner nozzle 10 thereby to form the gas passage 12. As a result, the gas passage 12 is opened around the laser irradiation port 2 to form an assist gas injection port 13. The converging assist gas nozzle 108 thus constructed is made of a Cu-Cr alloy for preventing the sputter or fume from sticking to the nozzle.

The results of testing the stick of the sputter to the optical protecting filter by using the laser irradiation unit according to the present embodiment are presented in the following. The laser irradiation conditions and the optical system used are also presented.
Laser:
Pulse YAG (Pulse Nd: YAG), Laser (Wavelength: 1.06 µm),
Multi-Mode,
Average Output: 357 (W)
(taken before the optical system protecting filter), Repetition Frequency: 8 (PPS)
Optical System:
Focal Length f: 120 (mm)
Flow Rate of gas Blow:
Upper stage: 1001/min.
Lower state: 1101/min.
Angle of Divergence ϑ : 14.5 degrees
(Numerical Aperture NA = sin ϑ),
Just Focus
Optical System Protecting Filter:
Glass Plate Coated with A.R.(Anti Reflective) on Two Faces .
The following two work samples were used to be welded:
JIS G3302 SGCC: ZMO, F06
(L100(mm) x W30(mm) x T1.0(mm)).
The remaining conditions were:
Welding Speed: 50 (cm/min.);
Welding Length: 20 (mm);
Assist Gas: Ar.

In the welding method for acceleration tests, moreover, ten weld beads were continuously formed at a pitch of 5 mm on one set of welding work by using a six-axis multi-joint robot. The one hundred beads of the continuous ten beads were converted to about eight thousands beads of the ordinary welding by the test results of converting the number of beads of continuous ten beads into that of the two superposed welding of beads of 20 mm.

The test results have revealed that the reduction percentage of the optical transmission of the YAG laser after the continuous one hundred bead welding was 8.4 % from the initial value.

The shaearing force of the welded work before and after the test were hardly changed.

### (Comparison)

As a comparison of the fourth embodiment, absolutely similar acceleration tests were performed for the continuous cylindrical irradiation unit of the prior art. The test results have revealed that the reduction percentage of the optical transmission of the YAG laser after the continuous one hundred bead welding was 15.6 % from the initial value.
The shearing force of the welded work before and after the test were dropped about 80 %.

As can be understood from those test results, according to the present embodiment, the laser irradiation unit can be manufactured at a reasonable cost by using the ordinary materials, and the walls, upon which the sputter or fume (or metal vapor) scattered from the welding work impinge or reflect, are eliminated as many as possible, so that the sputter eliminating effect is intensified. This intensity can be further enhanced by enlarging the diameter of the gas blow inlets so as to increase the flow rate of the gas blow and by reducing the slits of the gas blow outlets so as to accelerate the flow velocity of the gas blow. The sputter eliminating effect is ensured by forming the gas blow outputs in the two stages. In addition, the sputter stick preventing nozzle is made of the copper-chromium alloy so that shield gas blowing nozzle is soiled by neither the sputter nor the fume so that its inside can be prevented from being clogged with the sputter or the fume. Moreover, the irradiation unit is constructed of the assist gas holder having the large aperture so that the laser induced plasma can be spectrophotometrically observed while the laser process being monitored. Furthermore, the sputter protecting glass can also be easily observed.

## Claims

1. A laser irradiation unit comprising:
a cylindrical body having a laser irradiation port at its leading end; and
one or more lense means disposed in said body for concentrating a laser beam introduced and irradiation the concentrated laser beam from said laser irradiation port,
wherein said lense means is disposed at each of the incident side and the irradiation side of the laser beam, and wherein the improvement further comprises a cylindrical spacer interposed in an interchangeable and suppliable manner between said incident side lens and said irradiation side lens for setting the spacing between said lenses.

2. A laser irradiation unit according to Claim 1, wherein a plurality of kinds of cylindrical spacers having their axial lengths enlarged or reduced at pitches of 1 mm, 2 mm or 3 mm made interchangeable compared with ex-spacers.

3. A laser irradiation unit comprising:
a cylindrical body having a laser irradiation port at its leading end;
one or more lens means disposed in said body for concentrating a laser beam introduced and irradiation the concentrated laser beam from said laser irradiation port; and
a transparent protective glass arranged in said body between said laser irradiation port and said lens means,
wherein said body is divided into one and the other at a portion to be arranged with said protective glass, and wherein the one and other portions of said body can be so fitted each other that said protective glass can be clamped between said one and other body portions when said one body portion is fitted in the other.

4. A laser irradiation unit comprising:
a cylindrical body;
an irradiation nozzle disposed at the leading end portion of said body and having a laser irradiation port at its leading end; and
one or more lens means disposed in said body for concentrating a laser beam introduced and irradiating the concentrated laser beam from said laser irradiation port,
wherein said irradiation nozzle includes: an inner nozzle cylinder having a laser irradiation port at its leading end; and an outer cylinder engaging threadedly with said inner nozzle cylinder around the outer circumference of said inner nozzle cylinder and forming a gas passage, through which assist gases are passed, between itself and said inner nozzle cylinder, and
wherein one of said inner nozzle cylinder and said outer cylinder includes a plunger mounting bed extended toward the other and having a plunger for abutting in the radial direction against the circumference of the other of said inner nozzle cylinder and said outer cylinder.

5. A laser irradiation unit comprising:
a nozzle portion having a laser irradiation port facing a work;
a laser irradiation optical system for eradiating a laser beam from said laser irradiation port;
a passage space positioned between said laser irradiation port and said laser irradiation optical system for passing said laser beam therethrough; and
a holder having a blow gas outlet for blowing out blow gas in a direction substantially perpendicular to the laser irradiation direction in said passage space,
wherein said holder includes a connecting member connecting said nozzle portion to said laser irradiation optical system and opening the surrounding of said passage space to the outside.

6. A laser irradiation unit according to Claim 5,
wherein said blow gas outlet has first and second blow gas outlets facing said passage space.

7. A laser irradiation unit according to Claim 6,
wherein said first and second blow gas outlets are arranged to have a spacing ratio of L₁ : L₂ = 1 : 2 from the focal point of said optical system if their distances from said focal point are designated at L₁ and L₂, respectively.

8. A laser irradiation unit according to Claim 6 or 7,
wherein said first and second blow gas outlets are slitted to have at least a width of 3 mm or less.

9. A laser irradiation unit comprising:
a nozzle portion having a laser irradiation port facing a work;
a laser irradiation optical system for eradiating a laser beam from said laser irradiation port; and
a holder positioned between said laser irradiation port and said laser irradiation optical system and defining a passage space for passing said laser beam therethrough,
wherein said holder has an assist gas injection nozzle for injecting assist gases from the vicinity of said laser irradiation port to said work made of a copper alloy.

10. A laser irradiation unit according to Claim 9,
wherein said copper alloy is a copper-chromium alloy.

11. A laser irradiation unit according to any of Claims 5 to 8,
wherein laser irradiation unit have assist gas injecting nozzle according to Claim 9 or 10.

12. A laser irradiation unit according to Claim 9,
wherein said passage space has a protective filter attached thereto for protecting said laser irradiation optical system optically.

13. A laser irradiation unit according to Claim 9,
wherein said holder is diametrically sized to confirms a laser induced plasma visually in spectrophotometry and to monitor a laser process.

14. A laser irradiation unit according to Claim 9,
wherein said holder has the minimum column necessary for forming said blow gas outlets and holding said nozzle portion.

15. A laser irradiation unit according to Claim 14,
wherein said blow gas outlets are slitted, and wherein said holder has a slitted gas inlet for introducing the ambient gas into said passage space along said slitted blow gas outlets.
